# FASCICULE DE BREVET EUROPEEN

(11) **EP 2 300 283 B1**
(45) Date de publication et mention de la délivrance du brevet: **05.03.2014**
(21) Numéro de dépôt: 09797430.7
(22) Date de dépôt: 15.07.2009
(51) Int. Cl.: B60S 1/38, B60S 1/40, B60S 1/52

(54) **CONNECTEUR HYDRAULIQUE NOTAMMENT POUR SYSTEME D'ESSUIE-GLACE DE VEHICULE AUTOMOBILE**
HYDRAULIKVERBINDUNG, INSBESONDERE FÜR EIN KRAFTFAHRZEUG-SCHEIBENWISCHERSYSTEM
HYDRAULIC CONNECTOR, PARTICULARLY FOR MOTOR VEHICLE WINDSCREEN WIPER SYSTEM

(30) Priorité: 15.07.2008 FR 0804033
(43) Date de publication de la demande: 30.03.2011
(60) Demande divisionnaire: 13182890.7
(73) Titulaire: Valeo Systèmes d'Essuyage, 78321 La Verrière (FR)
(72) Inventeur: CAILLOT, Gérald, 78720 Cernay la Ville (FR); JARASSON, Jean-Michel, 78990 Elancourt (FR); IZABEL, Vincent, 91380 Chilly Mazarin (FR)
(74) Mandataire: Rosolen-Delarue, Katell
(86) Numéro de dépôt international: PCT/EP2009/005138
(87) Numéro de publication internationale: WO 2010/006776

(56) Documents cités:
- EP-A- 0 724 993
- EP-A- 1 918 167
- DE-A1- 10 000 372
- DE-A1-102004 056 835
- DE-A1-102006 013 900

## Description

La présente invention a pour objet un connecteur hydraulique, utilisé notamment dans un système d'essuie glace par exemple sur un véhicule automobile. L'invention a également pour objets : un système d'essuie-glace pourvu d'un bras d'actionnement, d'un balai d'essuyage et du connecteur ; un bras d'actionnement seul pourvu du connecteur ; un balai d'essuyage seul pourvu du connecteur.

Les systèmes d'essuie-glace, tels que ceux utilisés pour le nettoyage ou le dégivrage du pare-brise d'un véhicule automobile, comprennent généralement un bras d'actionnement relié à une source en fluide ou liquide de nettoyage et/ou de dégivrage et à un moteur, ainsi qu'un balai d'essuyage connecté au bras d'actionnement.

Au cours de l'essuyage, un mouvement relatif existe entre le bras et le balai, de sorte que la connexion entre le bras et le balai doit permettre la rotation de ce balai par rapport à ce bras.

En outre, le balai doit pouvoir être facilement connecté et déconnecté du bras, pour permettre son remplacement ou entretien.

On prévoit donc généralement un adaptateur entre le bras et le balai, pour assurer cette connexion, et les mouvements relatifs précités entre le bras et le balai.

Dans le cas où l'éjection du fluide se fait à partir de buses disposées par exemple sur le capot du véhicule, la connexion entre le bras et le balai n'a pas d'autres fonctions que celles mentionnées ci-dessus.

Par contre, on peut prévoir que le fluide soit éjecté directement du balai d'essuyage pour arroser le pare-brise, dans le but d'augmenter la précision et l'efficacité du lavage ou du dégivrage.

Dans ce cas, il est nécessaire d'amener le fluide jusqu'au balai. Généralement, le balai comprend une ou deux rampes d'acheminement du fluide. On peut prévoir de connecter directement le ou les tuyaux d'arrivée en fluide sur ces rampes. Mais la connexion hydraulique est alors peu fiable en raison du mouvement relatif entre le bras et le balai. De plus, il est difficile dans ce cas de cacher et de protéger les tuyaux d'arrivée. Enfin, la connexion et la déconnexion ne sont pas des opérations simples pour l'utilisateur qui veut changer un balai usé.

On prévoit que l'adaptateur de connexion entre le bras et le balai serve également à la connexion hydraulique, tel que décrit par exemple dans le document WO 2006/056406, afin de résoudre les problèmes mentionnés ci-dessus.

Dans ce document, l'élément de connexion se décompose en un adaptateur 15 pourvu d'un trou traversant 19 pour l'assemblage en rotation avec le bras, et un répartiteur de fluide de nettoyage 27 qui vient s'assembler dans l'adaptateur 15.

Le répartiteur 27 est pourvu de deux raccords de sortie 21 en chacune de ses extrémités, destinés à être raccordés à une rampe du balai, et d'un raccord d'entrée 22 perpendiculaire débouchant directement dans le cylindre central de répartition, destiné à être raccordé au tuyau d'arrivée de fluide.

Dans le cas d'un balai à deux rampes, on prévoit deux éléments de connexion symétriques, assemblés par coopération d'un ensemble bouchon 17 du premier élément de connexion plus trou 18 du deuxième élément de connexion.

Le problème posé par cet élément de connexion est qu'il est complexe et coûteux à fabriquer et à assembler.

Par ailleurs, la connexion/déconnexion du balai n'est pas simple.

Egalement, le risque existe que le répartiteur se désassemble de l'adaptateur en raison des mouvements relatifs entre le bras et le balai.

En outre, le raccord d'arrivée débouche directement dans le répartiteur, sur le côté, ce qui rend difficile la protection du tuyau d'arrivée de fluide ainsi que sa dissimulation pour des raisons esthétiques.

Un autre problème est celui de l'effort de surpression engendré généralement parallèlement au balai, donc au répartiteur, dans la mesure où le tuyau d'arrivée en fluide est généralement dissimulé et guidé le long du bras, et donc arrive au niveau de la connexion orienté parallèlement à ce balai. Cet effort de surpression risque alors de déconnecter le tuyau d'arrivée du raccord d'entrée dans le répartiteur qui se trouve orienté perpendiculairement à cet effort de surpression.

L'objet de l'invention est donc d'apporter une solution aux problèmes précités parmi d'autres problèmes.

L'invention se rapporte donc, selon un premier aspect, à un connecteur hydraulique, notamment pour système d'essuie-glace d'un véhicule automobile, destiné à être assemblé à un balai d'essuyage pourvu d'au moins une rampe d'acheminement de fluide notamment de nettoyage et/ou de dégivrage.

Le connecteur comprend au moins un raccord d'entrée apte à être connecté à une arrivée du fluide, et au moins un répartiteur pourvu d'au moins un raccord de sortie destiné à être connecté à la rampe.

Le connecteur comprend en outre au moins un chemin interne pour le cheminement du fluide depuis le raccord d'entrée jusqu'au répartiteur.

Ainsi, grâce à la présence du chemin interne dans le connecteur, le raccord d'entrée peut être placé à divers endroits du connecteur, sans déboucher directement dans le répartiteur.

En particulier, il peut être placé en sorte de réduire les effets de l'effort de surpression, de permettre la dissimulation et la protection de la connexion, et de faciliter la connexion/déconnexion.

De préférence, le raccord d'entrée est orienté parallèlement au répartiteur. Alternativement, il peut être orienté perpendiculairement à ce répartiteur, par le dessus du connecteur.

Dans les deux cas, l'arrivée en fluide étant orientée parallèlement au balai, par le dessus, la connexion/déconnexion est facilitée.

Le connecteur se décompose en deux parties monoblocs. Une première de ses deux parties monoblocs, de préférence obtenue par moulage d'un matériau plastique, comprend le raccord d'entrée et une première portion du chemin interne. La deuxième de ces deux parties monoblocs, également de préférence obtenue par moulage d'un matériau plastique, comprend le reste du chemin interne et tout ou partie du répartiteur.

Le connecteur ainsi formé peut donc être fabriqué simplement, par exemple par moulage des deux pièces monoblocs mentionnées, malgré la présence d'un chemin interne qui peut être complexe.

Ces deux parties monoblocs sont assemblées hermétiquement, par exemple par soudage par ultrasons ou par surmoulage d'un joint. Ce joint peut être constitué du même matériau que celui de la première et/ou de la deuxième partie monobloc.

La fabrication du connecteur est simplifiée, et sa connexion/déconnexion également, dans la mesure où il forme un ensemble monobloc, après assemblage des deux parties mentionnées ci-dessus.

Eventuellement, le connecteur peut comprendre deux raccords d'entrée aptes à être connecté à une arrivée du fluide.

Eventuellement également, notamment lorsque le connecteur est destiné à être utilisé avec un balai d'essuyage pourvu de deux rampes d'acheminement de fluide, le connecteur peut comprendre deux répartiteurs.

Chacun de ces répartiteurs est alors pourvu d'au moins un raccord de sortie destiné à être connecté à l'une ou l'autre des deux rampes.

Un ou plusieurs des répartiteurs peut être pourvu de deux raccords de sortie opposés destinés à être connectés à la rampe.

Il est également possible de prévoir qu'un ou plusieurs des répartiteurs soit pourvu d'un orifice, de préférence en son milieu, ce qui permet d'arroser la vitre également au milieu du balai, là ou se situe le connecteur et ou la rampe est interrompue par ce connecteur.

Un ou plusieurs des raccords d'entrée, peut être un raccord mâle, par exemple de type canule, destiné alors à être connecté à une arrivée du fluide femelle.

Alternativement, un ou plusieurs des raccords d'entrée peut être un raccord femelle, par exemple de type orifice à la surface du connecteur, destiné alors à être connecté à une arrivée du fluide mâle, par exemple de type canule.

L'invention se rapporte également, selon un autre aspect, à un système d'essuie-glace, notamment pour un véhicule automobile.

Le système comprend un balai d'essuyage, pourvu d'au moins une rampe d'acheminement de fluide notamment de nettoyage et/ou de dégivrage.

Le balai est connecté à un bras d'actionnement par l'intermédiaire d'un adaptateur.

L'adaptateur est relié en rotation à un connecteur tel que présenté ci-dessus.

Ce connecteur et connecté d'une part par son ou ses dits raccords de sortie à la ou aux rampes, et d'autre part par son ou ses raccords d'entrée à une ou deux arrivées de fluide.

L'invention se rapporte encore, selon un autre aspect, à un balai d'essuyage, notamment pour un système d'essuie-glace pour un véhicule automobile, pourvu d'au moins une rampe d'acheminement de fluide notamment de nettoyage et/ou de dégivrage.

Le balai comprend un connecteur tel que présenté ci-dessus, connecté par son ou ses raccords de sortie à la ou aux rampes.

L'invention se rapporte enfin, selon un autre aspect, à un bras d'actionnement d'essuie-glace notamment pour un véhicule automobile.

Ce bras comprend un adaptateur relié en rotation à un connecteur tel que présenté ci-dessus.

Le connecteur est apte à être connecté par son ou ses raccords d'entrée à une ou deux arrivées de fluide.

D'autres caractéristiques et avantages de l'invention apparaîtront plus clairement et de manière complète à la lecture de la description ci-après des variantes préférées de réalisation, lesquelles sont données à titre d'exemples non limitatifs et en référence aux dessins annexés suivants.
- figures 1a et 1b : représentent schématiquement un exemple de balai d'essuyage, respectivement vu en perspective éclatée et en coupe transversale,
- figures 2a et 2b : représentent schématiquement un premier exemple de connecteur hydraulique, respectivement en perspective pleine et coupée,
- figures 3a et 3b : représentent schématiquement un deuxième exemple de connecteur hydraulique, respectivement en perspective pleine et coupée,
- figures 4a et 4b : représentent schématiquement un troisième exemple de connecteur hydraulique, respectivement en perspective pleine et coupée,
- figures 5a et 5b : représentent schématiquement un quatrième exemple de connecteur hydraulique, respectivement en perspective pleine et coupée,
- figure 6 : représente schématiquement un cinquième exemple de connecteur hydraulique, en perspective pleine,
- figures 7a et 7b : représentent schématiquement un sixième exemple de connecteur hydraulique, respectivement en perspective pleine et coupée,
- figures 8a à 8d : représentent schématiquement un septième exemple de connecteur hydraulique, dans différents modes de représentation en perspective pleine ou coupée.

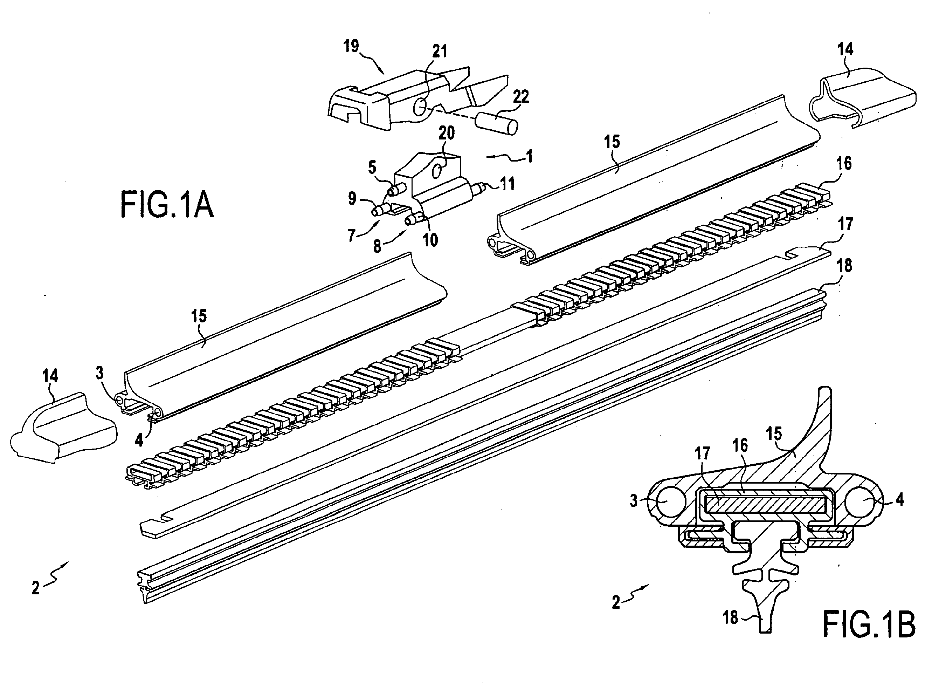

Tel que représenté aux figures 1a et 1b, le balai d'essuyage 2 est relié à, ou destiné à être relié à, un bras d'actionnement (non représenté) par l'intermédiaire d'un adaptateur 19, pour former alors un système d'essuie-glace.

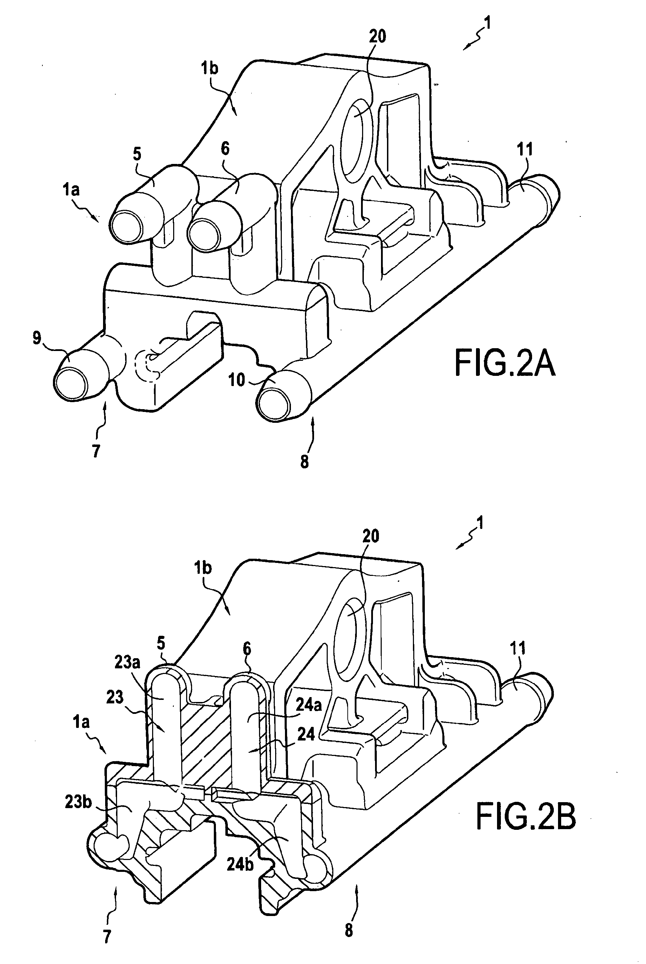

L'adaptateur 19 est relié en rotation à un connecteur hydraulique 1, qui est décrit plus loin selon différents exemples de réalisation en références aux figures 2 à 8, par un axe d'articulation 22 et les orifices d'assemblage 20 et 21 respectivement dans le connecteur 1 et l'adaptateur 19.

Ce connecteur hydraulique 1, dans cette variante de réalisation, comprend un raccord 5 d'entrée, destiné à être connecté à une arrivée en fluide de nettoyage et/ou de dégivrage.

Le connecteur 1 comprend par ailleurs plusieurs raccords de sortie 9, 10, 11, destinés à se connecter aux rampes d'acheminement 3, 4 du balai 2.

Précisément, le connecteur 1 comprend deux répartiteurs 7 et 8 qui se terminent chacun par deux raccords de sortie en leurs extrémités opposées respectives.

Ainsi; le répartiteur 7 comprend un premier raccord de sortie 9 et un deuxième en son extrémité opposé, non visible sur la représentation en perspective de la figure 1a. Par ailleurs, le répartiteur 8, comprend un premier raccord de sortie 10 et un deuxième 11 en son extrémité opposée.

Comme indiqué ci-dessus; les raccords de sortie 9, 10, 11 du connecteur 1 sont destinés à se connecter aux rampes d'acheminement 3, 4 du balai 2, qui sont, dans cet exemple, formées dans la partie supérieure de ce balai 2 qui joue le rôle de déflecteur 15, formée en deux parties 15 connectées de chaque côté du connecteur 1. Ces rampes d'acheminement 3, 4 sont percées d'orifices permettant de projeter le fluide de nettoyage et/ou de dégivrage sur la vitre.

Comme on peut le voir plus précisément sur la vue en coupe transversale de la figure 1b, le déflecteur 15 présente un profil tel qu'il reçoit une monture 16. Cette monture 16, selon son profil spécifique, reçoit à sont tour une latte métallique 17, et, en partie inférieure, une lame 18 d'essuyage en caoutchouc ou similaire.

Deux embouts ou caches 14 ferment les extrémités de chaque parties du déflecteur 15, en sorte de fermer les extrémités des rampes d'acheminement 3, 4, d'empêcher la monture 16, la latte 17 et la lame 18 de glisser hors de leurs logements respectifs, ainsi que pour des raisons d'esthétique.

Dans le premier exemple de connecteur hydraulique 1 représenté aux figures 2a et 2b, chacun des répartiteurs 7 et 8 se termine par deux raccords de sortie opposés 9, 10, 11, tel qu'expliqué plus haut.

En outre, le connecteur 1 présente deux raccords d'entrée 5, 6, qui seront chacun connecté à une arrivée de fluide (la même, ou deux distinctes). Ces raccords d'entrée 5 et 6 sont orientés parallèlement aux répartiteurs 7 et 8, qui sont eux même destinés à être orientés dans lé prolongement, donc parallèlement aux rampes d'acheminement 3 et 4 du balai 2 de la figure 1a.

Dans la mesure où le balai 2 est orienté sensiblement parallèlement au bras d'actionnement, au moins en position de repos, et où l'arrivée en fluide qui vient se connecter aux raccords d'entrée 5 et 6 suit le bras d'actionnement, ces raccords d'entrée 5 et 6 se trouvent donc orientés sensiblement parallèlement à l'orientation de l'arrivée en fluide.

Dans cet exemple, le connecteur 1 se décompose en une première partie 1a monobloc, moulée en matière plastique, et une deuxième partie 1b monobloc, également moulée en matière plastique.

Ces deux parties monoblocs 1a et 1b sont assemblées l'une avec l'autre de façon à former un connecteur 1 monobloc.

L'assemblage doit être hermétique, et peut se faire par exemple par soudure à ultrasons, ou encore par surmoulage d'un joint de préférence dans la même matière plastique que la matière utilisée pour l'une ou l'autre des deux parties 1a, 1b, ou pour les deux.

Comme on peut le voir plus précisément sur la vue en coupe de la figure 2b, un chemin interne 23 relie le raccord d'entrée 5 au répartiteur 7, et un autre chemin interne 24 relie le raccord d'entrée 6 au répartiteur 8.

Chacun des deux chemins internes 23 et 24 comprend une première portion 23a, 24a partant du raccord d'entrée 5 ou 6, et appartenant à la première partie monobloc 1a.

Le reste du chemin interne 23, référencé 23b, part de la portion 23a pour rejoindre le répartiteur 7, et appartient à la deuxième partie monobloc 1b.

De même, le reste du chemin interne 24, référencé 24b, part de la portion 24a pour rejoindre le répartiteur 8, et appartient à la deuxième partie monobloc 1b.

Ainsi, la première partie monobloc 1a comprend les deux raccords d'entrée 5 et 6, et les deux premières portions 23a et 23b respectivement des deux chemins internes 23 et 24.

Par ailleurs, la deuxième partie monobloc 1b comprend le reste 23b du chemin interne 23, et le reste 24b du chemin interne 24, ainsi que les deux répartiteurs 7 et 8.

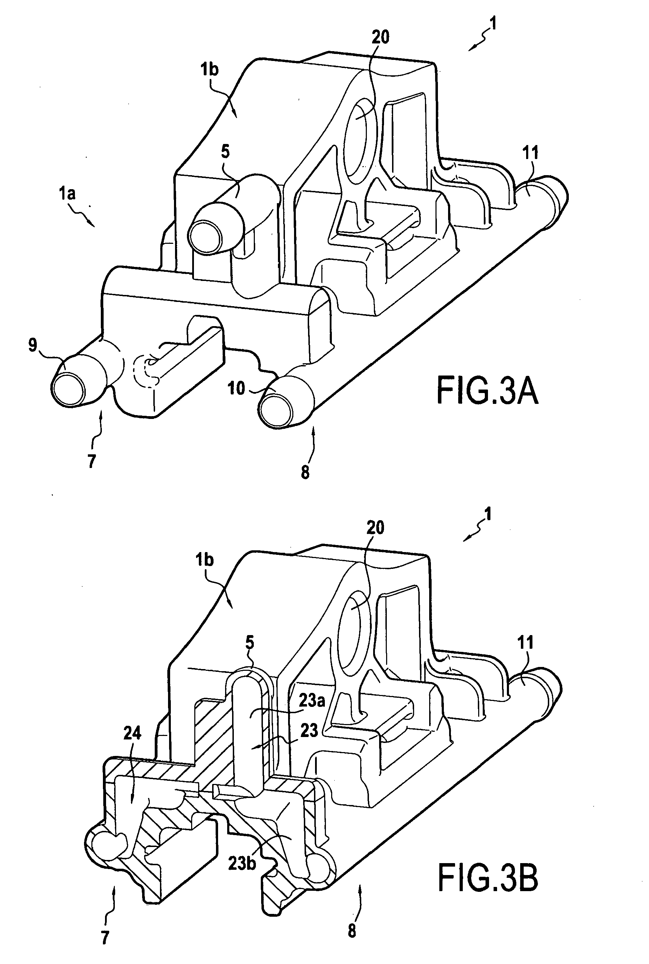

Dans le deuxième exemple de connecteur 1, tel que représenté aux figures 3a et 3b, un seul raccord d'entrée 5, sur la première partie monobloc la du connecteur 1, permet d'alimenter le répartiteur 8 sur la deuxième partie monobloc 1b du connecteur 1, par l'intermédiaire du chemin interne 23 subdivisé en une première portion 23 a dans la première partie monobloc 1a et le reste 23b dans la deuxième partie monobloc 1b.

Le chemin interne 24, qui déboucle dans le répartiteur 7, n'est relié à aucun raccord d'entrée.

Il est ainsi possible de fabriquer indépendamment les premières parties monoblocs 1a, avec un seul 5 ou deux 5 et 6 raccords d'entrée, et les deuxièmes parties monoblocs avec un seul ou deux répartiteurs 7 et 8, et de les assembler pour former un connecteur 1 adapté à un type de balai 2 ou un autre (bi-rampes, mono-rampe...).

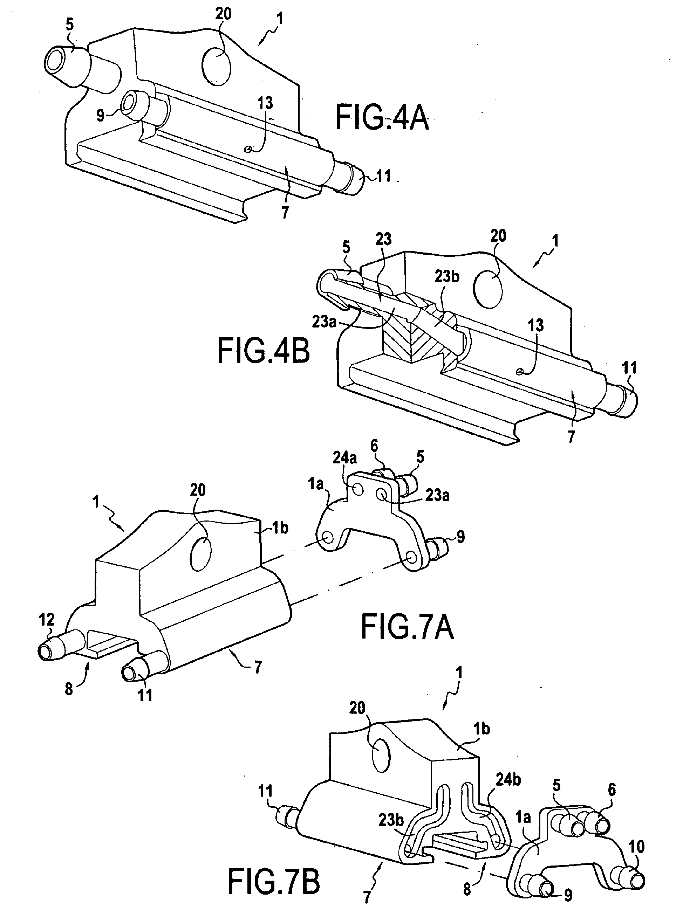

Dans le troisième exemple de connecteur 1, tel que représenté aux figures 4a et 4b, un seul raccord d'entrée 5, en position centrale, est relié à un seul répartiteur 7 par l'intermédiaire d'un chemin interne 23.

Ce répartiteur 7 peut comprendre un orifice 13, de préférence en son milieu, permettant la projection du fluide circulant dans le conduit du répartiteur 7 sur la vitre à nettoyer ou dégivrer, à un niveau du balai où la rampe d'acheminement 3 ou 4 (voir figure 1a) est interrompue.

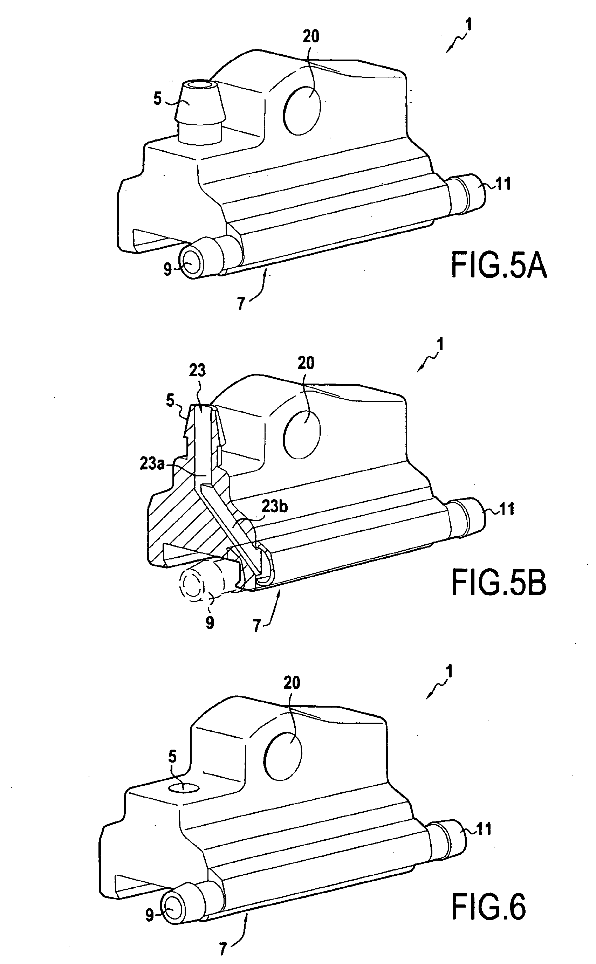

Les figures 5a et 5b montrent un quatrième exemple de connecteur 1, présentant un unique raccord d'entrée 5 connecté à un unique répartiteur 7.

Dans cet exemple, la seule différence avec le connecteur des figures 4a et 4b est que le raccord d'entrée est orienté perpendiculairement au répartiteur 7, par le dessus du connecteur 1.

L'arrivée en fluide, généralement orientée sensiblement parallèlement au répartiteur (voir explications ci-dessus en références aux figures 1a, 2a et 2b), est alors raccordée à ce raccord d'entrée 5 par un élément de jonction en « L », dissimulé et bloqué par l'adaptateur 19 (voir figure 1).

Dans cet exemple comme dans les précédents, le ou les raccords d'entrée 5, 6 sont des raccords mâle, de type canule pénétrant dans l'arrivée en fluide femelle.

A l'inverse, dans le cinquième exemple de connecteur 1, représenté à la figure 6, le raccord d'entrée 5 est un raccord femelle ou orifice 5 dans laquelle l'arrivée en fluide mâle, par exemple de type canule, est susceptible de pénétrer.

A l'exception de cette différence, ce cinquième exemple de connecteur 1 est en tout point identique au quatrième exemple de connecteur 1 tel qu représenté aux figures 5a et 5b.

Le sixième exemple de connecteur 1, tel que représenté aux figures 7a et 7b, présente deux raccords d'entrée 5, 6 chacun relié à un répartiteur 7, 8 par l'intermédiaire d'un chemin interne 23, 24.

Ce connecteur 1 est également constitué de deux parties monoblocs 1a et 1b assemblées hermétiquement comme expliqué plus haut.

Dans cet exemple, la première partie monobloc 1a comprend les deux raccords d'entrée 5 et 6, et les toutes premières portions respectives 23a et 24a des chemins internes 23 et 24, correspondant aux parties horizontales respectives de ces chemins internes 23 et 24, dans le prolongement des raccords 5 et 6.

La deuxième partie monobloc 1b comprend les restes respectifs 23b, 24b de chacun des chemins internes 23 et 24 et la plus grande partie de chaque répartiteur 7 et 8 (à l'exception de la courte portion horizontale en prolongement de chaque raccord de sortie 9 et 10).

Cette deuxième partie monobloc 1b comprend donc la plus grande portion de chacun des chemins internes 23 et 24, ainsi que la plus grande partie de chaque répartiteur 7 et 8.

Ces restes 23b et 24b des chemins internes 23 et 24 sont constitués par des canaux ouverts longitudinalement, qui se retrouvent fermés hermétiquement une fois les deux parties monoblocs 1a et 1b assemblées hermétiquement tel qu'expliqué plus haut.

On peut remarquer que, dans ce sixième exemple, les raccords de sortie 9 et 10 font partie de la première partie monobloc 1a, alors que dans le premier exemple (figures 2a et 2b) ces raccords de sortie 9 et 10 font partie de la deuxième partie monoblocs 1b.

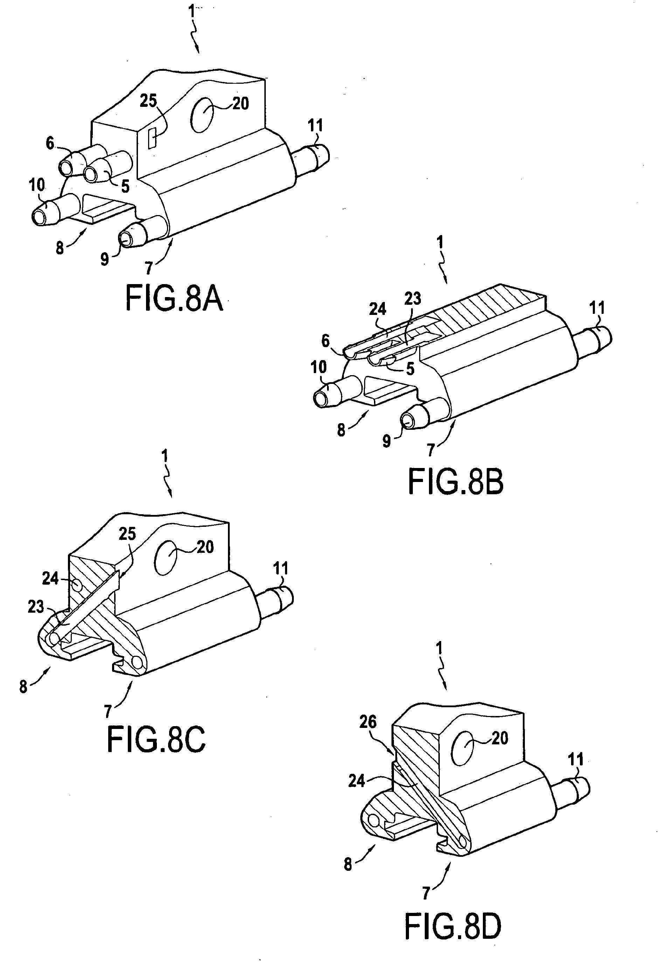

Dans le septième exemple non revendiqué, tel que représenté aux figures 8a à 8d, le connecteur 1 n'est pas constitué de deux parties monoblocs assemblées hermétiquement, comme dans les précédents exemples, mais d'un seul bloc.

On retrouve deux raccords d'entrée 5 et 6 reliés respectivement à deux répartiteurs 8 et 7 par l'intermédiaire de deux chemins internes 23 et 24.

Compte tenu de la complexité des chemins internes 23 et 24 qui ne sont pas en ligne droite, puisque les raccords d'entrée 5 et 6 ne peuvent pas être alignés avec les répartiteurs 7 et 8, il est nécessaire de prévoir des orifices de démoulage 25 et 26 pour chacun de ces chemins internes 23 et 24.

Ainsi, comme on peut le voir à la figure 8b, chacun des chemins internes 23 et 24 présente une première partie horizontale partant respectivement des raccords d'entrée 5 et 6.

L'une de ces premières parties horizontales, par exemple celle correspondant au chemin interne 24, dépasse légèrement l'autre.

Le démoulage, en ce qui concerne ces deux premières parties horizontales, ne pose pas de problème puisque l'évacuation de la matière peut se faire par l'intermédiaire des raccords d'entrée 5 et 6.

Chacune des premières parties horizontales des chemins internes 23 et 24 se prolonge ensuite en une partie oblique qui rejoint le répartiteur 7 ou 8, tel qu'on peut le voir sur les coupes des figures 8c et 8d.

Ainsi, le chemin interne 23 relie le raccord d'entrée 5 au répartiteur 8 transversalement opposé, et le chemin interne 24 relie le raccord d'entrée 6 au répartiteur 7 transversalement opposé.

Pour chacune des parties obliques des chemins internes 23 et 24, il est donc nécessaire de prévoir un orifice de démoulage 25, 26 pour permettre l'évacuation de la matière lors du démoulage.

L'ensemble de la description ci-dessus est donné à titre d'exemple, et n'est donc pas limitatif de l'invention.

En particulier, le nombre exact de raccord d'entrée 5, 6, de répartiteurs 7, 8, de raccords de sortie 9, 10, 11, 12, et de chemins internes 23, 24, n'est pas limitatif de l'invention.

### Liste des références numériques

1 - Connecteur hydraulique
1a, 1b - parties monoblocs du connecteur hydraulique
2 - balai d'essuyage
3, 4 - rampes d'acheminement du fluide de nettoyage et/ou dégrivrage
5, 6 - raccords d'entrée
7, 8, - répartiteurs
9, 10, 11, 12 - raccords de sortie
13 - orifice d' arrosage
14 - embouts
15 - déflecteur
16 - monture
17 - latte
18 - lame d'essuyage
19 - adaptateur
20 - orifice d'assemblage dans le connecteur hydraulique
21 - orifice d'assemblage dans l'adaptateur
22 - axe d'articulation
23, 24 - chemins internes
23a, 23b, 24a, 24b - portions des chemins internes
25, 26 - orifices de démoulage

## Revendications

1. Connecteur hydraulique (1) notamment pour système d'essuie-glace d'un véhicule automobile, destiné à être assemblé à un balai d'essuyage (2) pourvu d'au moins une rampe (3, 4) d'acheminement de fluide notamment de nettoyage et/ou de dégivrage, ledit connecteur (1) comprenant au moins un raccord d'entrée (5, 6) apte à être connecté à une arrivée dudit fluide, et au moins un répartiteur (7, 8) pourvu d'au moins un raccord de sortie (9, 10, 11) destiné à être connecté à ladite rampe (3, 4), ledit connecteur comprenant en outre au moins un chemin interne (23, 24) pour le cheminement dudit fluide depuis ledit raccord d'entrée (5, 6) jusqu'audit répartiteur (7, 8) **caractérisé en ce que** le connecteur (1) comprend une première partie monobloc (1a), de préférence obtenue par moulage d'un matériau plastique, et comprenant le raccord d'entrée (5, 6) et une première portion (23a, 24a) du chemin interne (23, 24), et une deuxième partie monobloc (1b), de préférence obtenue par moulage d'un matériau plastique, et comprenant le reste (23b, 24b) du chemin interne (23, 24) et tout ou partie du répartiteur (7, 8) et **en ce que** la première et la deuxième parties monoblocs (1a, 1b) sont assemblées hermétiquement, par exemple par soudage par ultrasons ou par surmoulage d'un joint de préférence dans le même matériau que celui de ladite première et/ou de ladite deuxième parties monoblocs (1a, 1b).

2. Connecteur (1) selon la revendication 1, **caractérisé en ce que** le raccord d'entrée (5, 6) est orienté parallèlement au répartiteur (7, 8), ou perpendiculairement audit répartiteur (7, 8) par le dessus dudit connecteur (1).

3. Connecteur (1) selon l'une quelconque des revendications précédentes, **caractérisé en ce qu'**il comprend deux raccords d'entrée (5, 6) aptes à être connecté à une arrivée du fluide.

4. Connecteur (1) selon l'une quelconque des revendications 1 à 3, destiné à être assemblé à un balai d'essuyage (2) pourvu de deux rampes (3, 4) d'acheminement de fluide notamment de nettoyage et/ou de dégivrage, **caractérisé en ce qu'**il comprend deux répartiteurs (7, 8) chacun pourvu d'au moins un raccord de sortie (9, 10, 11) destiné à être connecté à l'une ou l'autre desdites deux rampes (3, 4).

5. Connecteur selon l'une quelconque des revendications 1 à 4, **caractérisé en ce que** le répartiteur (7, 8), ou un des deux répartiteurs (7, 8), ou les deux (7, 8), est ou sont pourvu(s) de deux raccords de sortie opposés (9, 10, 11) destinés à être connecté à la rampe (3, 4) ou l'une des rampes (3, 4).

6. Connecteur (1) selon l'une quelconque des revendications 1 à 5, **caractérisé en ce que** le répartiteur (7, 8), ou un des deux répartiteurs (7, 8), ou les deux (7, 8), est ou sont pourvu(s) d'un orifice (13) de préférence en son ou leur milieu.

7. Connecteur (1) selon l'une quelconque des revendications 1 à 6, **caractérisé en ce que** le raccord d'entrée (5, 6), ou un des deux raccords d'entrée (5, 6), ou les deux (5, 6), est un ou sont des raccord(s) mâle(s), par exemple de type canule (5, 6), destiné(s) à être connecté(s) à une arrivée du fluide femelle.

8. Connecteur (1) selon l'une quelconque des revendications 1 à 6, **caractérisé en ce que** le raccord d'entrée (5, 6), ou un des deux raccords d'entrée (5, 6), ou les deux (5, 6), est un ou sont des raccord(s) femelle(s), par exemple de type orifice (5) à la surface dudit connecteur (1), destiné(s) à être connecté(s) à une arrivée du fluide mâle, par exemple de type canule.

9. Système d'essuie-glace notamment pour un véhicule automobile, comprenant un balai d'essuyage (2), pourvu d'au moins une rampe (3, 4) d'acheminement de fluide notamment de nettoyage et/ou de dégivrage, et connecté à un bras d'actionnement par l'intermédiaire d'un adaptateur (19), **caractérisé en ce que** ledit adaptateur (19) est relié en rotation à un connecteur (1) selon l'une quelconque des revendications 1 à 8, et **en ce que** ledit connecteur (1) et connecté d'une part par son ou ses dits raccords de sortie (9, 10, 11) à ladite ou auxdites rampes (3, 4) et d'autre part par son ou ses dits raccords d'entrée (5, 6) à une ou deux arrivées de fluide.

10. Balai d'essuyage (2), notamment pour un système d'essuie-glace pour un véhicule automobile, pourvu d'au moins une rampe (3, 4) d'acheminement de fluide notamment de nettoyage et/ou de dégivrage, **caractérisé en ce qu'**il comprend un connecteur (1) selon l'une quelconque des revendications 1 à 8 connecté par son ou ses dits raccords de sortie (9, 10, 11) à ladite ou auxdites rampes (3, 4).

11. Bras d'actionnement d'essuie-glace notamment pour un véhicule automobile, **caractérisé en ce qu'**il comprend un adaptateur (19) relié en rotation à un connecteur (1) selon l'une quelconque des revendications 1 à 8, et **en ce que** ledit connecteur (1) est apte à être connecté par son ou ses dits raccords d'entrée (5, 6) à une ou deux arrivées de fluide.

## Patentansprüche

1. Hydraulischer Verbinder (1), insbesondere für ein Scheibenwischersystem eines Kraftfahrzeugs, der dazu bestimmt ist, an ein Wischerblatt (2) montiert zu werden, das mit mindestens einer Rampe (3, 4) zur Beförderung insbesondere eines Reinigungs- und/oder Enteisungsfluids versehen ist, wobei der Verbinder (1) mindestens einen Eingangsanschluss (5, 6), der mit einer Zuleitung des Fluids verbunden werden kann, und mindestens einen Verteiler (7, 8) enthält, der mit mindestens einem Ausgangsanschluss (9, 10, 11) versehen ist, der dazu bestimmt ist, mit der Rampe (3, 4) verbunden zu werden, wobei der Verbinder außerdem mindestens einen inneren Pfad (23, 24) zur Leitung des Fluids vom Eingangsanschluss (5, 6) bis zum Verteiler (7, 8) enthält, **dadurch gekennzeichnet, dass** der Verbinder (1) einen ersten einstückigen Teil (1a), der vorzugsweise durch Formen eines Kunststoffmaterials erhalten wird und den Eingangsanschluss (5, 6) und einen ersten Abschnitt (23a, 24a) des inneren Pfads (23, 24) enthält, und einen zweiten einstückigen Teil (1b) enthält, der vorzugsweise durch Formen eines Kunststoffmaterials erhalten wird und den Rest (23b, 24b) des inneren Pfads (23, 24) und den ganzen oder einen Teil des Verteilers (7, 8) enthält, und dass der erste und der zweite einstückige Teil (1a, 1b) hermetisch dicht zusammengebaut werden, zum Beispiel durch Ultraschallschweißen oder durch Aufformen einer Dichtung vorzugsweise aus dem gleichen Material wie der erste und/oder der zweite einstückige Teil (1a, 1b).

2. Verbinder (1) nach Anspruch 1, **dadurch gekennzeichnet, dass** der Eingangsanschluss (5, 6) parallel zum Verteiler (7, 8) oder lotrecht zum Verteiler (7, 8) über dem Verbinder (1) ausgerichtet ist.

3. Verbinder (1) nach einem der vorhergehenden Ansprüche, **dadurch gekennzeichnet, dass** er zwei Eingangsanschlüsse (5, 6) enthält, die mit einer Zuleitung des Fluids verbunden werden können.

4. Verbinder (1) nach einem der Ansprüche 1 bis 3, der dazu bestimmt ist, an ein Wischerblatt (2) montiert zu werden, das mit zwei Rampen (3, 4) zur Beförderung insbesondere eines Reinigungs- und/oder Enteisungsfluids versehen ist, **dadurch gekennzeichnet, dass** er zwei Verteiler (7, 8) enthält, die je mit mindestens einem Ausgangsanschluss (9, 10, 11) versehen sind, der dazu bestimmt ist, mit der einen oder anderen der zwei Rampen (3, 4) verbunden zu werden.

5. Verbinder nach einem der Ansprüche 1 bis 4, **dadurch gekennzeichnet, dass** der Verteiler (7, 8) oder einer der zwei Verteiler (7, 8) oder beide (7, 8) mit zwei entgegengesetzten Ausgangsanschlüssen (9, 10, 11) versehen ist (sind), die dazu bestimmt sind, mit der Rampe (3, 4) oder einer der Rampen (3, 4) verbunden zu werden.

6. Verbinder (1) nach einem der Ansprüche 1 bis 5, **dadurch gekennzeichnet, dass** der Verteiler (7, 8) oder einer der zwei Verteiler (7, 8) oder beide (7, 8) mit einer Öffnung (13) vorzugsweise in seiner oder ihrer Mitte versehen ist (sind).

7. Verbinder (1) nach einem der Ansprüche 1 bis 6, **dadurch gekennzeichnet, dass** der Eingangsanschluss (5, 6) oder einer der zwei Eingangsanschlüsse (5, 6) oder beide (5, 6) ein Einsteckanschluss ist (sind), zum Beispiel von der Art Kanüle (5, 6), der (die) dazu bestimmt ist (sind), mit einer Aufnahmezuleitung des Fluids verbunden zu werden.

8. Verbinder (1) nach einem der Ansprüche 1 bis 6, **dadurch gekennzeichnet, dass** der Eingangsanschluss (5, 6), oder einer der zwei Eingangsanschlüsse (5, 6), oder beide (5, 6) ein Aufnahmeanschluss (Aufnahmeanschlüsse) ist oder sind, zum Beispiel von der Art Öffnung (5) an der Oberfläche des Verbinders (1), der (die) dazu bestimmt ist (sind), mit einer Einsteckzuleitung des Fluids verbunden zu werden, zum Beispiel von der Art Kanüle.

9. Scheibenwischersystem, insbesondere für ein Kraftfahrzeug, das mindestens ein Wischerblatt (2) enthält, das mit mindestens einer Rampe (3, 4) zur Beförderung insbesondere eines Reinigungs- und/oder Enteisungsfluids versehen und über einen Adapter (19) mit einem Betätigungsarm verbunden ist, **dadurch gekennzeichnet, dass** der Adapter (19) drehbar mit einem Verbinder (1) nach einem der Ansprüche 1 bis 8 verbunden ist, und dass der Verbinder (1) einerseits durch seinen oder seine Ausgangsanschlüsse (9, 10, 11) mit der oder den Rampen (3, 4) und andererseits durch seinen oder seine Eingangsanschlüsse (5, 6) mit einer oder zwei Fluidzuleitungen verbunden ist.

10. Wischerblatt (2), insbesondere für ein Scheibenwischersystem für ein Kraftfahrzeug, das mit mindestens einer Rampe (3, 4) zur Beförderung insbesondere eines Reinigungs- und/oder Enteisungsfluids versehen ist, **dadurch gekennzeichnet, dass** es einen Verbinder (1) nach einem der Ansprüche 1 bis 8 enthält, der durch seinen oder seine Ausgangsanschlüsse (9, 10, 11) mit der oder den Rampen (3, 4) verbunden ist.

11. Scheibenwischer-Betätigungsarm, insbesondere für ein Kraftfahrzeug, **dadurch gekennzeichnet, dass** er einen Adapter (19) enthält, der drehbar mit einem Verbinder (1) nach einem der Ansprüche 1 bis 8 verbunden ist, und dass der Verbinder (1) durch seinen oder seine Eingangsanschlüsse (5, 6) mit einer oder zwei Fluidzuleitungen verbunden werden kann.

## Claims

1. Hydraulic connector (1) in particular for a motor vehicle windscreen wiper system, intended to be assembled to a wiper blade (2) provided with at least one manifold (3, 4) for routing a fluid, in particular a cleaning and/or de-icing fluid, said connector (1) comprising at least one inlet coupling (5, 6) able to be connected to a feed of said fluid, and at least one distributor (7, 8) provided with at least one outlet coupling (9, 10, 11) intended to be connected to said manifold (3, 4), said connector additionally comprising at least one internal path (23, 24) for routing said fluid from said inlet coupling (5, 6) to said distributor (7, 8), **characterized in that** the connector (1) comprises a first monoblock part (1a), preferably obtained by moulding a plastic, and comprising the inlet coupling (5, 6) and a first portion (23a, 24a) of the internal path (23, 24), and a second monoblock part (1b), preferably obtained by moulding a plastic, and comprising the remainder (23b, 24b) of the internal path (23, 24) and all or part of the distributor (7, 8), and **in that** the first and the second monoblock parts (1a, 1b) are assembled hermetically, for example by ultrasonic welding or by overmoulding a joint preferably made in the same material as that of said first and/or of said second monoblock parts (1a, 1b).

2. Connector (1) according to Claim 1, **characterized in that** the inlet coupling (5, 6) is oriented parallel to the distributor (7, 8), or perpendicularly to said distributor (7, 8) from the top of said connector (1).

3. Connector (1) according to either one of the preceding claims, **characterized in that** it comprises two inlet couplings (5, 6) able to be connected to a fluid feed.

4. Connector (1) according to any one of Claims 1 to 3, intended to be assembled to a wiper blade (2) provided with two manifolds (3, 4) for routing a fluid, in particular a cleaning and/or de-icing fluid, **characterized in that** it comprises two distributors (7, 8) each provided with at least one outlet coupling (9, 10, 11) intended to be connected to one or the other of said two manifolds (3, 4).

5. Connector according to any one of Claims 1 to 4, **characterized in that** the distributor (7, 8), or one of the two distributors (7, 8), or both (7, 8), is or are provided with two opposite outlet couplings (9, 10, 11) intended to be connected to the manifold (3, 4) or one of the manifolds (3, 4).

6. Connector (1) according to any one of Claims 1 to 5, **characterized in that** the distributor (7, 8), or one of the two distributors (7, 8), or both (7, 8), is or are provided with an orifice (13) preferably in its or their centre.

7. Connector (1) according to any one of Claims 1 to 6, **characterized in that** the inlet coupling (5, 6), or one of the two inlet couplings (5, 6), or both (5, 6), is a male coupling or are male couplings, for example of the cannula type (5, 6), intended to be connected to a female fluid feed.

8. Connector (1) according to any one of Claims 1 to 6, **characterized in that** the inlet coupling (5, 6), or one of the two inlet couplings (5, 6), or both (5, 6) is a female coupling or are female couplings, for example of the orifice (5) type at the surface of said connector (1), intended to be connected to a male fluid feed, for example of the cannula type.

9. Windscreen wiper system in particular for a motor vehicle, comprising a wiper blade (2), provided with at least one manifold (3, 4) for routing a fluid, in particular a cleaning and/or de-icing fluid, and connected to an actuating arm via an adaptor (19), **characterized in that** said adaptor (19) is connected in rotation to a connector (1) according to any one of Claims 1 to 8, and **in that** said connector (1) is connected on the one hand by its said outlet coupling or its said outlet couplings (9, 10, 11) to said manifold or to said manifolds (3, 4) and on the other hand by its said inlet coupling or its said inlet couplings (5, 6) to one or two fluid feeds.

10. Wiper blade (2), in particular for a windscreen wiper system for a motor vehicle, provided with at least one manifold (3, 4) for routing a fluid, in particular a cleaning and/or de-icing fluid, **characterized in that** it comprises a connector (1) according to any one of Claims 1 to 8 connected by its said outlet coupling or its said outlet couplings (9, 10, 11) to said manifold or to said manifolds (3, 4).

11. Windscreen wiper actuating arm in particular for a motor vehicle, **characterized in that** it comprises an adaptor (19) connected in rotation to a connector (1) according to any one of Claims 1 to 8, and **in that** said connector (1) is able to be connected by its said inlet coupling or its said inlet couplings (5, 6) to one or two fluid feeds.
